# EUROPEAN PATENT APPLICATION

(11) **EP 2 849 234 A1**
(43) Date of publication of application: **18.03.2015**
(21) Application number: 13788590.1
(22) Date of filing: 31.01.2013
(51) Int. Cl.: H01L 31/042, E04H 5/00

(54) **SOLAR CELL APPARATUS**

(30) Priority: 11.05.2012 JP 2012109946; 27.09.2012 JP 2012214763
(71) Applicant: Kyocera Corporation, Kyoto-shi, Kyoto 612-8501 (JP)
(72) Inventor: KITANO, Takahiro, Kyoto-shi, Kyoto 612-8501 (JP); UCHIDA, Kouki, Kyoto-shi, Kyoto 612-8501 (JP); YAMASHITA, Mitsuo, Kyoto-shi, Kyoto 612-8501 (JP)
(74) Representative: Viering, Jentschura & Partner Patent- und Rechtsanwälte
(86) International application number: PCT/JP2013/052207
(87) International publication number: WO 2013/168440

(57) **Abstract**

An object is to provide a photovoltaic system with good anti-contamination properties. To achieve the object, a solar cell module 2 constituting a photovoltaic system comprises a solar cell panel 15, a first frame member 16v that is disposed next to a first rail side portion 24v of a first lateral rail member 242 and that protects a first panel side portion of the solar cell panel 15, and a second frame member 16w that is disposed next to a second rail side portion 24w of a second lateral rail member 241 and that protects a second panel side portion opposite the first panel side portion. The level of an upper surface of the first frame member 16v in a vertical direction is equal to or higher than the level of an upper surface of the first lateral rail member 24 in the vertical direction.

## Description

### Technical Field

The present invention relates to a photovoltaic system.

### Background Art

A photovoltaic system includes a solar cell module and a mount for securing the solar cell module.

A solar power generation system including a plurality of photovoltaic systems is required to enhance ease of construction of the system and reduce the cost of construction. A technique has recently been developed to reduce fastening members for fastening solar cell modules to a mount and fix the solar cell modules to the mount by fitting (refer to PTL 1, for example).

### Citation List

### Patent Literature

PTL 1: Japanese Unexamined Patent Application Publication No. 2011-153465

### Summary of Invention

### Problem to be solved by the Invention

The mount of the photovoltaic system disclosed in PTL 1 has a structure to hold an upper surface and a lower surface of a frame of each solar cell module. Accordingly, the mount covering the upper surface of the frame of each solar cell module may retain rainwater or the like flowing on the solar cell module in a sloping direction of the solar cell module. Consequently, rainwater tends to accumulate on a light receiving surface of the solar cell module. Furthermore, the light receiving surface of the solar cell module may be contaminated with fine dust or the like contained in rainwater upon evaporation of the rainwater. Therefore, the efficiency of power generation may be reduced.

A typical large photovoltaic system is designed to be maintenance-free. Accordingly, a light receiving surface (for example, a glass surface) of each solar cell module is not subjected to cleaning. Such photovoltaic systems require a technique for reducing the above-described adhesion of dirt.

One of objects of the present invention is to provide a photovoltaic system with enhanced anti-contamination properties.

### Means for solving the Problems

A photovoltaic system according to an embodiment of the present invention comprises a plurality of lateral rail members arranged parallel to one another on a sloping arrangement surface towards from a top to a bottom of the arrangement surface, each lateral rail member including a first rail side portion located on an upper side of the arrangement surface and a second rail side portion located on a lower side of the arrangement surface. The apparatus in the present embodiment further includes a solar cell module disposed between a first lateral rail member and a second lateral rail member adjacent to each other of the lateral rail members. The first lateral rail member is located on the lower side. The second lateral rail member is located on the upper side. In the present embodiment, the solar cell module includes a solar cell panel, a first frame member that is disposed next to the first rail side portion of the first lateral rail member and that protects a first panel side portion of the solar cell panel, and a second frame member that is disposed next to the two rail side portion of the two lateral rail member and that protects a second panel side portion opposite the first panel side portion. In the present invention, the level of an upper surface of the first frame member in a vertical direction is equal to or higher than the level of an upper surface of the first lateral rail member in the vertical direction.

### Advantageous Effects of Invention

According to the above-described embodiment, the photovoltaic system exhibits good anti-contamination properties.

### Brief Description of Drawings

[Fig. 1] Fig. 1 is a diagram illustrating a photovoltaic system according to an embodiment of the present invention, Fig. 1(a) being a perspective view of the photovoltaic system, Fig. 1(b) being an enlarged perspective view of part A in Fig. 1(a).
[Fig. 2] Fig. 2 is a diagram illustrating an exemplary solar cell module used in the photovoltaic system according to the embodiment of the present invention, Fig. 2(a) being a plan view of the solar cell module as viewed from a light receiving surface side, Fig. 2(b) being a cross-sectional view taken along the line B-B' in Fig. 2(a).
[Fig. 3] Fig. 3 is a diagram illustrating a part of the photovoltaic system according to the embodiment of the present invention, Fig. 3 being a sectional view taken along the line C-C' in Fig. 1(a).
[Fig. 4] Figs. 4 (a) to (c) are sectional views illustrating exemplary assembling of the photovoltaic system according to the embodiment of the present invention.
[Fig. 5] Fig. 5 illustrates a modification of the photovoltaic system according to the embodiment of the present invention, Fig. 5 being a sectional view of part corresponding to that of Fig. 3.
[Fig. 6] Fig. 6 illustrates an exemplary solar cell module used in the modification of the photovoltaic system according to the embodiment of the present invention, Fig. 6(a) being a plan view of the solar cell module as viewed from a rear surface side, Fig. 6(b) being a cross-sectional view taken along the line D-D' in Fig. 6(a), Fig. 6(c) being a sectional view taken along the line E-E' in Fig. 6(a).
[Fig. 7] Fig. 7 illustrates an exemplary solar cell module used in a photovoltaic system according to another embodiment of the present invention, Fig. 7(a) being a plan view of the solar cell module as viewed from the light receiving surface side, Fig. 7(b) being a sectional view taken along the line F-F' in Fig. 7(a), Fig. 7(c) being a sectional view taken along the line G-G' in Fig. 7(b).
[Fig. 8] Fig. 8 is a diagram illustrating a part of a solar cell module used in the photovoltaic system according to the another embodiment of the present invention, Fig. 8 being an enlarged perspective view of part J in Fig. 7(a).
[Fig. 9] Fig. 9 is diagrams illustrating parts of the photovoltaic system according to the another embodiment of the present invention, Fig. 9(a) being an enlarged perspective view of part corresponding to part A in Fig. 1(b), Fig. 9(b) being a sectional view illustrating an exemplary water passage.
[Fig. 10] Fig. 10 is diagrams illustrating parts of a photovoltaic system according to another embodiment of the present invention, Fig. 10(a) being a sectional view of part corresponding to part taken along the line C-C' in Fig. 1(a), Fig. 10(b) being an enlarged perspective view of part corresponding to the part A in Fig. 1(a).
[Fig. 11] Fig. 11 is diagram illustrating a photovoltaic system according to another embodiment of the present invention, Fig. 11(a) being a side view of the photovoltaic system, Fig. 11(b) being a sectional view of the photovoltaic system taken along the line K-K' in Fig. 11(a).
[Fig. 12] Fig. 12 is a diagram illustrating a part of the photovoltaic system according to the another embodiment of the present invention, Fig. 12 being an enlarged plan view of part M in Fig. 11(b).
[Fig. 13] Fig. 13 is a diagram illustrating a part of a photovoltaic system according to the another embodiment of the present invention, Fig. 13 being an enlarged plan view of part N in Fig. 11(a).
[Fig. 14] Fig. 14 is a diagram illustrating a part of a photovoltaic system according to the another embodiment of the present invention, Fig. 14 being an enlarged plan view of the part N in Fig. 11(a).

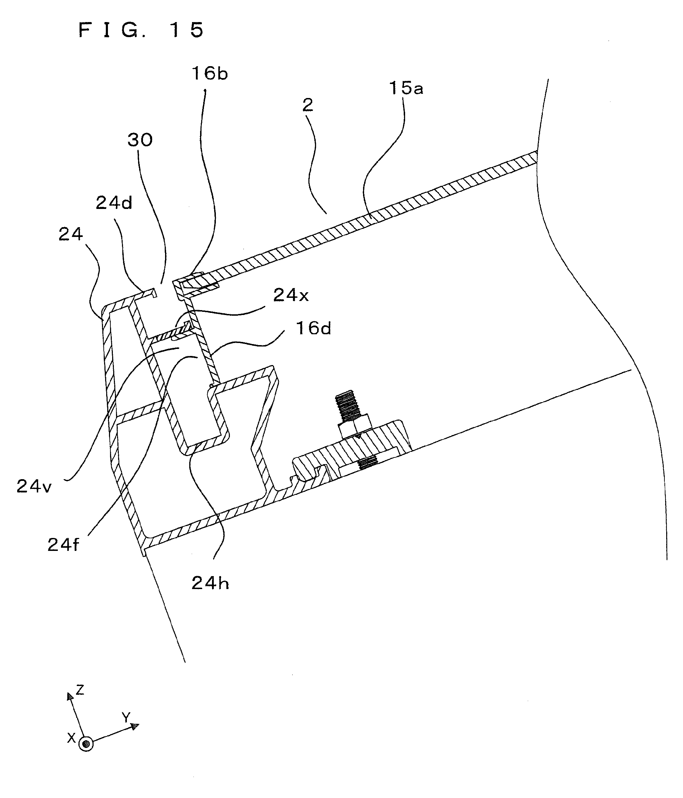

[Fig. 15] Fig. 15 is a diagram illustrating a part of a photovoltaic system according to the another embodiment of the present invention, Fig. 15 being an enlarged sectional view of part in the vicinity of a lateral rail member closest to eaves.

### Mode for carrying out of the Invention

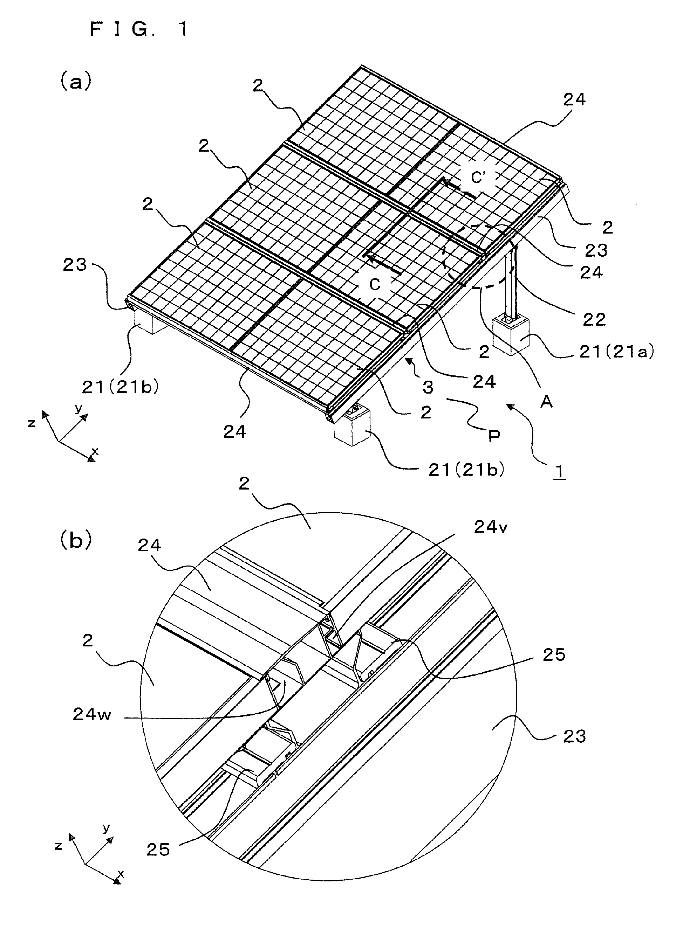

Photovoltaic systems according to embodiments of the present invention will be described with reference to the drawings. In the following description, a direction that is parallel to a light receiving surface of a solar cell module 2 included in a photovoltaic system 1 according to an embodiment of the present invention and that is perpendicular to a sloping direction in which the light receiving surface slopes relative to an installation plane P will be referred to as an X-axis direction. In addition, a direction parallel to the light receiving surface and the sloping direction will be referred to as a Y-axis direction and a direction perpendicular to the light receiving surface will be referred to as a Z-axis direction. In the following description, a lower side of the photovoltaic system 1 in the sloping direction in, for example, Fig. 1 will be referred to as an eaves side and an upper side thereof in the sloping direction in Fig. 1 will be referred to as a ridge side. The drawings are for illustration purposes only. The sizes and relative positions of elements in the drawings are not accurately drawn to scale.

### <Photovoltaic system>

The photovoltaic system 1 includes pole members 22 on bases 21 arranged on the installation plane P, serving as a horizontal plane, and longitudinal rail members 23 supported by upper parts of the pole members 22 as illustrated in Fig. 1(a), for example. The photovoltaic system 1 further includes a plurality of lateral rail members 24 fixed to the longitudinal rail members 23 such that the lateral rail members 24 are parallel to one another in a direction orthogonal to the longitudinal rail members 23, and one or more solar cell modules 2 arranged between the lateral rail members 24. The solar cell module 2 is disposed between a first lateral rail member and a second lateral rail member adjacent to each other.

The longitudinal rail member 23 has an upper surface corresponding to an arrangement surface on which the lateral rail members 24 are arranged and which slopes relative to the installation plane P. The lateral rail members 24 are arranged parallel to one another in a direction from an upper side to a lower side of the sloping arrangement surface. In this embodiment, accordingly, the lateral rail member 24 located on the lower side in the sloping direction (-Y direction) is a first lateral rail member and the lateral rail member 24 located on the upper side in the sloping direction (+Y direction) is a second lateral rail member. As illustrated in Fig. 1(b), the lateral rail member 24 includes a first rail side portion 24v located on the upper side of the above-described arrangement surface and a second rail side portion 24w located on the lower side of the arrangement surface.

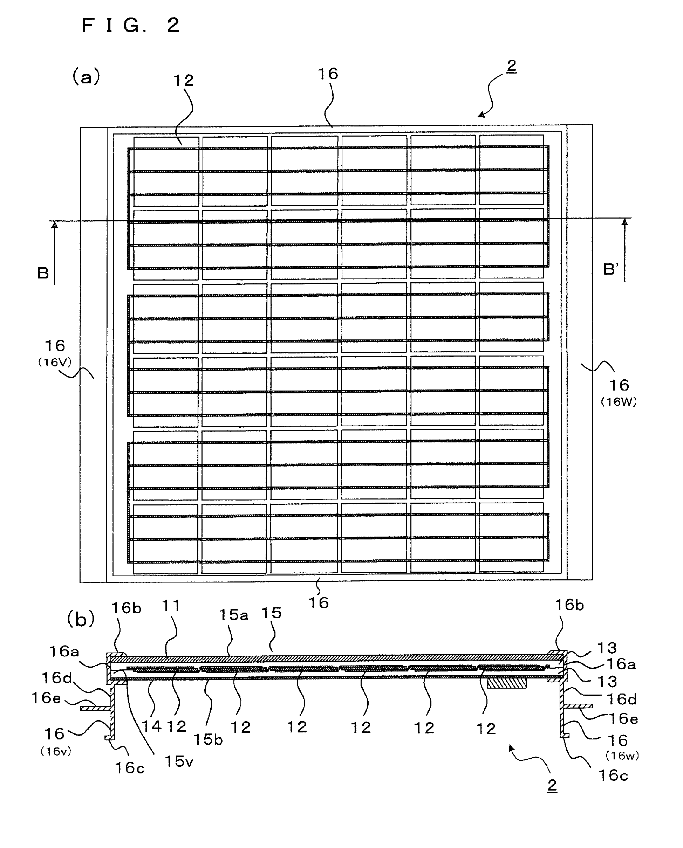

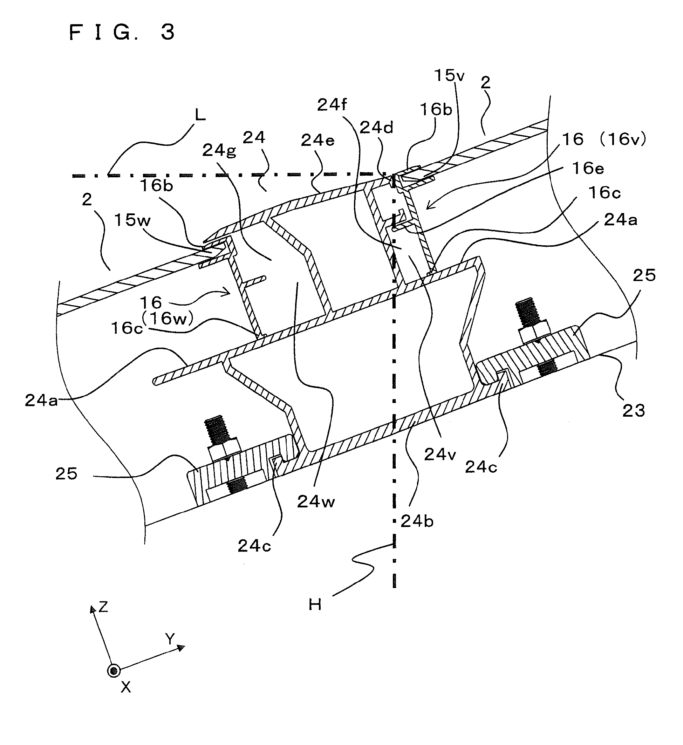

As illustrated in Figs. 2 and 3, the solar cell module 2 includes a solar cell panel 15 including a first panel side portion 15v and a first frame member 16v disposed next to the first rail side portion 24v of the above-described first lateral rail member. The first frame member 16v protects the first panel side portion 15v of the solar cell panel 15. The solar cell module 2 further includes a second frame member 16w disposed next to the second rail side portion 24w of the above-described second lateral rail member (illustrated in Fig. 3 as the same lateral rail member 24 for convenience of description). The second frame member 16w protects a second panel side portion 15w (illustrated in Fig. 3 as being included in an eaves-side solar cell panel for convenience of description) opposite the first panel side portion 15v.

Referring to Fig. 2, the first frame member 16v includes a fitting portion 16a (for example, a first projection 16e), serving as a first frame engagement portion. The fitting portion 16a, at a side part of the first frame member 16v, engages with the first rail side portion 24v of the lateral rail member 24, serving as the above-described first lateral rail member. A level L of an upper surface of the first frame member 16v in a vertical direction H is equal to or higher than the level of an upper surface of the lateral rail member 24, serving as the first lateral rail member, in the vertical direction.

Exemplary components of the photovoltaic system 1 illustrated in Fig. 1 will now be described in detail.

### <Solar Cell Module>

As illustrated in Fig. 2(a) and (b), the solar cell module 2 includes a cluster of solar cell elements 12 electrically connected to one another. The solar cell module 2 can have any of various structures, such as a super-straight structure in which light is incident on a substrate side on which the solar cell elements 12 are arranged, a double glass structure in which the solar cell elements are surrounded with glass substrates, and a substrate structure in which light is incident on the opposite side of the substrate. In particular, the super-straight structure illustrated in Fig. 2 is suitable for a solar cell including crystalline silicon. An exemplary solar cell module having the super-straight structure will be described in the embodiment.

As illustrated in Fig. 2, the solar cell module 2 includes the solar cell panel 15 that is a laminate including a translucent substrate 11, the solar cell elements 12 arranged in predetermined positions relative to the translucent substrate 11, a filler 13 for protecting a surrounding area of the solar cell elements 12, and a rear-surface protector 14. The solar cell panel 15 has a light receiving surface 15a that corresponds to a front surface on which light is mainly incident and a rear surface 15b located on a rear side opposite to the light receiving surface 15a.

The translucent substrate 11 has a function of protecting the solar cell elements 12 and so on from the light receiving surface 15a side. The translucent substrate 11 may be comprised of, for example, tempered glass, super white glass or the like.

The solar cell elements 12 have a function of converting incident light to electricity. Each solar cell element 12 includes a semiconductor substrate comprised of, for example, monocrystalline silicon, polycrystalline silicon or the like, and electrodes arranged on a front surface (upper surface) and a rear surface (lower surface) of the semiconductor substrate. The solar cell element 12 is, for example, rectangular in plan view. In this case, each side of the solar cell element 12 has a dimension of 100 to 200 mm, for example. In these solar cell elements 12, for example, an electrode disposed on the front surface of one of the two adjacent solar cell elements 12 is electrically connected to an electrode disposed on the rear surface of the other solar cell element 12 by a wiring member (inner lead). Consequently, the solar cell elements 12 are arranged in such a way that these are connected in series. As the wiring member, for example, a solder-coated copper foil and the like can be used.

Any type of solar cell element 12 may be used. For example, a thin-film solar cell element comprised of a material such as an amorphous silicon series, chalcopyrite series such as CIGS, CdTe series or the like may be used as a photoelectric conversion portion of the solar cell element. The above-described thin-film solar cell element may be configured such that, for example, a photoelectric conversion layer comprised of an amorphous silicon series, CIGS series, CdTe series or the like and transparent electrodes are appropriately laminated on, for example, a glass substrate. Such a thin-film solar cell element can be obtained by patterning the photoelectric conversion layer and the transparent electrodes on the glass substrate for integration. Accordingly, a wiring member for connecting the photoelectric conversion layers can be eliminated from the thin-film solar cell element. The solar cell element 12 may be of a type in which an amorphous silicon thin film is formed on a monocrystalline or polycrystalline silicon substrate.

The filler 13, disposed on both principal surfaces of the solar cell element 12, has a function of sealing the solar cell element 12. For example, a thermosetting resin, such as a copolymer of ethylene-vinyl acetylate, can be used as the filler 13.

The rear-surface protector 14 has a function of protecting the solar cell elements 12 and the like from a rear side surface 15b side. The rear-surface protector 14 is bonded to the filler 13 disposed next to the rear surface 15b of the solar cell panel 15. The rear-surface protector 14 may be comprised of, for example, polyvinyl fluoride (PVF), polyethylene terephthalate (PET), polyethylene naphthalate (PEN), or a laminate of layers of materials appropriately selected from those materials.

Referring to Fig. 2, an outer edge of the solar cell panel 15 of the solar cell module 2 is provided with frame members 16. The frame members 16 have a function of holding the solar cell panel 15. Each frame member 16 is an elongated member to strengthen an outer end of the solar cell panel 15. The frame member 16 includes a fitting portion 16a, a frame upper surface 16b, a frame bottom face 16c, and a frame side surface 16d. The fitting portion 16a is a portion to which the solar cell panel 15 is fitted. The frame upper surface 16b is a surface disposed on a sunlight receiving side. The frame bottom face 16c is a surface disposed on a back side of the frame upper surface 16b. The frame side surface 16d connects the frame upper surface 16b and the frame lower surface 16c and faces outward.

In addition, the frame member 16 corresponding to the lateral rail member 24 includes the first projection 16e on the frame side surface 16d. Referring to Fig. 3, the first projection 16e projects from middle part of the frame member 16 in a direction along the height of the frame member 16 such that the first projection 16e is substantially parallel to the principal surfaces of the solar cell panel 15. The first projection 16e is included in the fitting portion (first frame engagement portion) 16a to engage with a first fitting portion 24f, which will be described later, of the lateral rail member 24.

The above-described frame member 16 can be formed by, for example, extruding aluminum.

### <Mount>

A mount 3 supports the solar cell modules 2. Referring to Fig. 1, the mount 3 is disposed on the bases 21 arranged on the installation plane P such as the ground. The pole members 22 are arranged on ridge-side bases 21a of the bases 21. Additionally, the longitudinal rail member 23 is disposed on an eaves-side base 21b and the pole member 22 so as to span the distance therebetween. The lateral rail members 24 are arranged so as to span the distance between the longitudinal rail members 23 provided in parallel with each other. In this case, a longitudinal direction of the lateral rail member 24 is substantially orthogonal to a longitudinal direction of the longitudinal rail member 23. The lateral rail members 24 are arranged at regular intervals substantially equal to the width of the solar cell module 2.

### <Bases>

The bases 21 function as foundations of the photovoltaic system 1. As the bases 21, for example, elongated concrete continuous footings embedded in the ground can be used. If the ground is soft, bottom part of the continuous footing may be widened to reduce ground pressure. Such a continuous footing can be supported by the ground at a relatively large area of the bottom part of the continuous footing. Consequently, a warp in the photovoltaic system 1 caused by uneven settlement of the bases 21 can be reduced. Thus, breakage or the like of the solar cell module 2 is reduced.

For example, a screw pile which is a type of friction pile made of a stainless steel may be used as the bases 21. The screw pile is formed by providing a helical wing on the outer periphery of a pile body which has a circular cross-section. Accordingly, the screw pile exhibits increased surface friction and increased pull-out resistance. Such friction piles, serving as the bases 21, enhance pull-out resistance of the photovoltaic system 1 when wind blowing upward applies pressure to the photovoltaic system 1. Thus, the strength of the photovoltaic system 1 is increased.

### <Pole Members>

The pole members 22 are arranged on the ridge-side first bases 21a and the eaves-side second bases 21b such that a longitudinal direction of the pole members 22 is perpendicular to the installation plane P. Referring to Fig. 1, the pole member 22 supports a ridge-side part of the longitudinal rail member 23.

Each pole member 22 has a cross-section shaped like "I" or "H", for example. Such a pole member 22 can be formed by, for example, extruding an aluminum alloy.

### <Longitudinal Rail Members>

The longitudinal rail member 23 is a member disposed on the base 21 and the pole member 22 so as to span the distance therebetween and slope relative to the installation plane P. The lateral rail members 24 are fixed on the longitudinal rail members 23 provided in parallel with each other such that the lateral rail members 24 are substantially orthogonal to the longitudinal direction of the longitudinal rail members 23. The longitudinal rail members 23 have a cross-section similar to, for example, that of a substantially square pipe. Such a longitudinal rail member 23 can be formed by, for example, extruding an aluminum alloy.

### <Lateral Rail Members>

As illustrated in Figs. 1 and 3, the lateral rail member 24 is disposed on the longitudinal rail members 23 such that the lateral rail member 24 is longitudinally aligned with the X-axis direction. The lateral rail member 24 may be an elongated member having an elongated shape, for example. A longitudinal dimension (in the X-axis direction) of the lateral rail member 24 may be appropriately determined depending on the dimensions and material of the solar cell module 2. For example, this dimension may be a dimension of one or more solar cell modules 2 in the X-axis direction. In the embodiment, as illustrated in Fig. 1(a), the longitudinal dimension of the lateral rail member 24 is two times as long as the dimension of the solar cell module 2 in the X-axis direction.

In the embodiment, the lateral rail member 24 has a shape like a square pipe having a closed cross-section and having thereon recesses opening in both directions perpendicular to the longitudinal direction. Accordingly, the lateral rail member 24 includes support portions 24a, a bottom portion 24b, hook-shaped portions 24c, an upper face end 24d, an upper portion 24e, the first fitting portion 24f, and a second fitting portion 24g.

The support portion 24a is a face that supports the frame bottom face 16c of the solar cell module 2 and extends in the X-axis direction. The lateral rail member 24 includes the support portion 24a that abuts against the frame bottom face 16c of the frame member 16, serving as the first frame member, of the solar cell module 2. The support portion 24a functions as a guide portion to guide the first frame engagement portion 16a to the first rail side portion 24v of the lateral rail member 24.

The bottom portion 24b of the lateral rail member 24 is a portion to abut against an upper surface of the longitudinal rail member 23. The bottom portion 24b is located under the support portion 24a.

Referring to Fig. 3, the hook-shaped portions 24c project from both sides of the bottom portion 24b in the Y-axis direction and each include a hook extending in the Z-axis direction. The hook-shaped portions 24c can be coupled to a stopper 25 fastened to the longitudinal rail member 23 by, for example, a bolt and a nut.

The first fitting portion 24f and the second fitting portion 24g of the lateral rail member 24 open in both directions in the Y-axis direction on the upper side of the support portion 24a. The first fitting portion 24f and the second fitting portion 24g are recesses, for example. The first projection 16e of the eaves-side frame member 16 of the solar cell module 2 is inserted into the first fitting portion 24f. Consequently, the first projection 16e engages with the first fitting portion 24f. At this time, the distance of the first fitting portion 24f in the Z-axis direction is substantially equal to the distance in the Z-axis direction between the frame bottom face 16c and an upper surface of the first projection 16e of the frame member 16. When an upper surface of the first fitting portion 24f comes into contact with the upper surface of the first projection 16e, the first projection 16e can be inserted into and engage with (or fit in) the first fitting portion 24f. The upper surface of the first fitting portion 24f and the first projection 16e do not have to be in contact with each other. For example, a small clearance may be provided between the upper surface of the first recess 24f and the first projection 16e. This facilitates insertion of the first projection 16e into the first fitting portion 24f.

The ridge-side frame member 16 of the solar cell module 2 is inserted into the second fitting portion 24g. More specifically, the distance of the second fitting portion 24g in the Z-axis direction is substantially equal to the distance between the frame upper surface 16b and the frame bottom face 16c of the frame member 16, so that the ridge-side frame member 16 of the solar cell module 2 can be inserted into and engage with (or fit in) the second fitting portion 24g. Thus, the second rail side portion 24w of the lateral rail member 24 covers an upper surface of the second frame member 16w of the solar cell module 2.

Furthermore, the level L of the upper surface of the first frame member 16v in the vertical direction H is equal to or higher than the level of the upper surface of the lateral rail member 24, serving as the first lateral rail member, in the vertical direction.

Such a lateral rail member 24 can be formed by, for example, extruding an aluminum alloy.

### <Method of Construction>

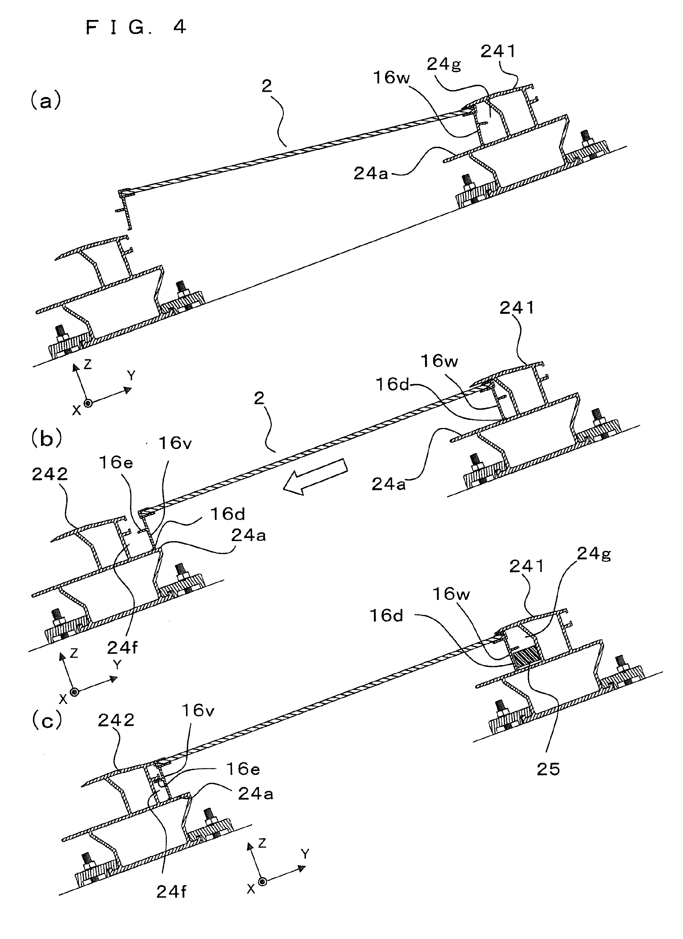

A method of securing the solar cell module 2 between the lateral rail members 24 will now be described with reference to Fig. 4.

Referring to Fig. 4(a), the ridge-side frame 16w, serving as the second frame member, of the solar cell module 2 is inserted at an angle into the second fitting portion 24g of a lateral rail member 241, serving as the second lateral rail member, located on an upper side. Then, the frame bottom face 16d of the eaves-side frame 16v, serving as the first frame member, of the solar cell module 2 is moved onto the support portion 24a of a lateral rail member 242, serving as the first lateral rail member.

Consequently, as illustrated in Fig. 4(b), the frame bottom face 16d of the solar cell module 2 are set on the support portion 24a of the lateral rail member 241 and the support portion 24a of the lateral rail member 242, serving as the first lateral rail member.

Referring to Fig. 4(c), the solar cell module 2 is shifted toward the eave side in the Y-axis direction so that the ridge-side frame 16w of the solar cell module 2 engages with the second fitting portion 24g of the lateral rail member 241. At this time, the eaves-side frame 16v, serving as the first frame member, engages with the first fitting portion 24f of the lateral rail member 242.

After securing as illustrated in Fig. 4(c), the stopper 25 may be disposed between the second fitting portion 24g and the eaves-side frame 16w. Consequently, the solar cell module 2 is less likely to disconnect from the lateral rail member 241 if the solar cell module 2 shifts toward the ridge side in the Y-axis direction.

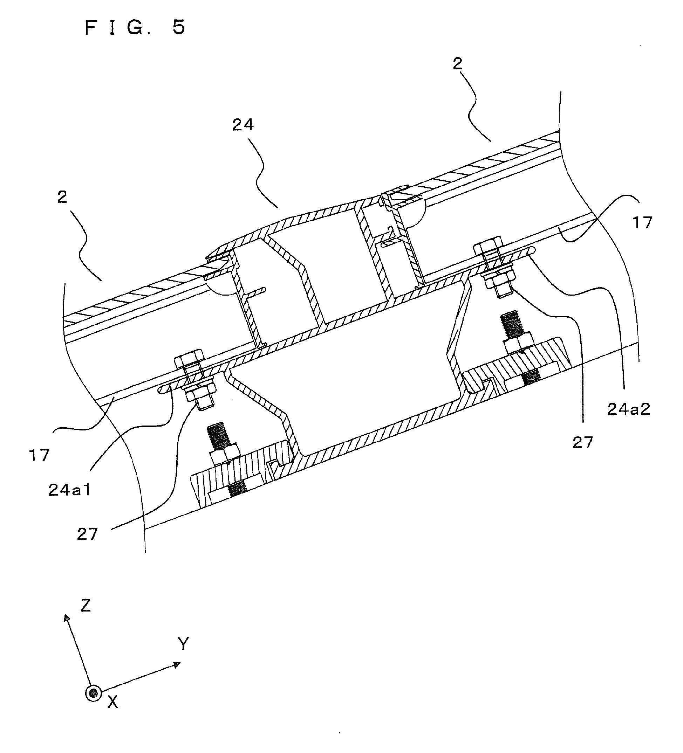

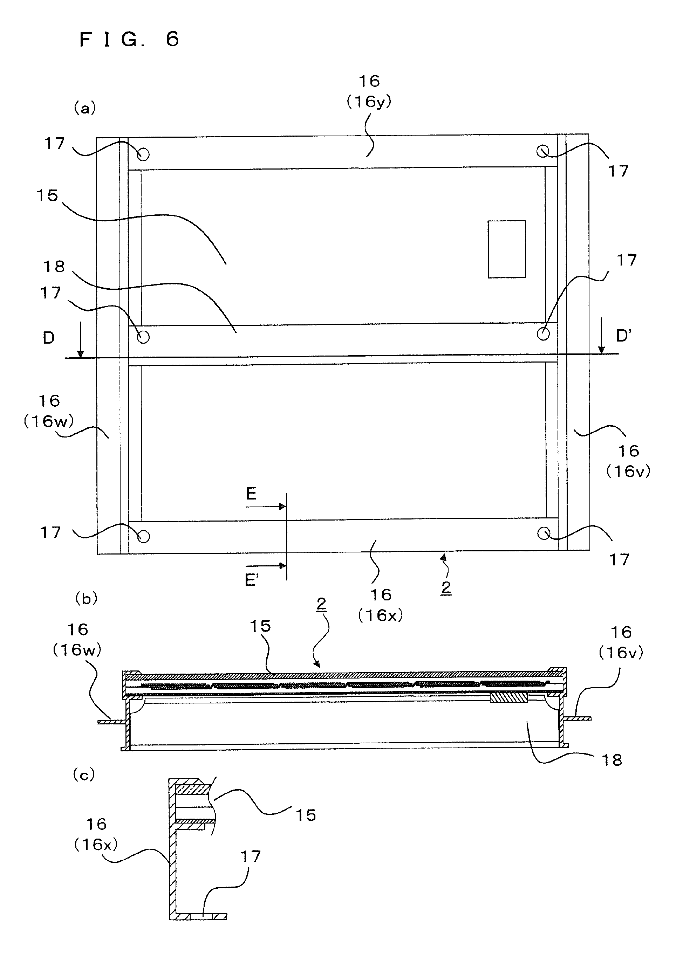

Furthermore, the solar cell module 2 may be fixed to the lateral rail member 24 with fastening members 27, as illustrated in Fig. 5. Referring to Fig. 5, the fastening members 27 are arranged in a first support portion 24a1 and a second support portion 24a2 extending from both the sides of the lateral rail member 24 in the Y-axis direction. The first and second support portions 24a1 and 24a2 each have a through-hole into which the fastening member 27 is inserted. In this case, as illustrated in Fig. 6, the solar cell module 2 further has holes 17 arranged in a third frame member 16x and a fourth frame member 16y connected to the eaves-side frame 16w, serving as the first frame member, and the ridge-side frame 16v, serving as the second frame member. Additionally, if the solar cell module 2 includes a rear-surface reinforcing member 18 as illustrated in Fig. 6, the rear-surface reinforcing member 18 also has holes 17. The fastening members 27 may be inserted into the holes 17 of the third frame member 16x, the fourth frame member 16y, and the rear-surface reinforcing member 18 to fix the solar cell module 2 to the first and second support portions 24a1 and 24a2 of the lateral rail members 24.

In the embodiment, as illustrated in Fig. 3, the level L of the upper surface of the first frame member 16v of the solar cell module 2 in the vertical direction H is equal to or higher than the level of the upper surface of the lateral rail member 24, serving as the first lateral rail member, in the vertical direction. Accordingly, in the embodiment, the frame upper surface 16b and the upper portion of the lateral rail member 24e can be substantially flush with each other or can provide a step between the frame upper surface 16b at a higher level and the upper portion at a lower level. Consequently, rainwater, dust and the like are less likely to accumulate on the light receiving surface of the solar cell module 2 in the embodiment, thus reducing the amount of dust and the like deposited upon evaporation of rainwater or the like. This enhances the anti-contamination properties.

In the embodiment, the height of the second fitting portion 24g of the lateral rail member 24 in the Z-axis direction may be greater than the height of the frame member 16 of the solar cell module 2 in the Z-axis direction and the depth of the second fitting portion 24g in the Y-axis direction may be slightly greater than the length of the first projection 16e of the frame member 16 in the Y-axis direction. This facilitates insertion of the first projection 16e into the second fitting portion 24g while the solar cell module 2 is inclined in the Y direction as illustrated in Fig. 4(a). Thus, the solar cell module 2 can be easily arranged in parallel and secured between the lateral rail members 24. Consequently, the ease of construction is improved.

### <Second Embodiment>

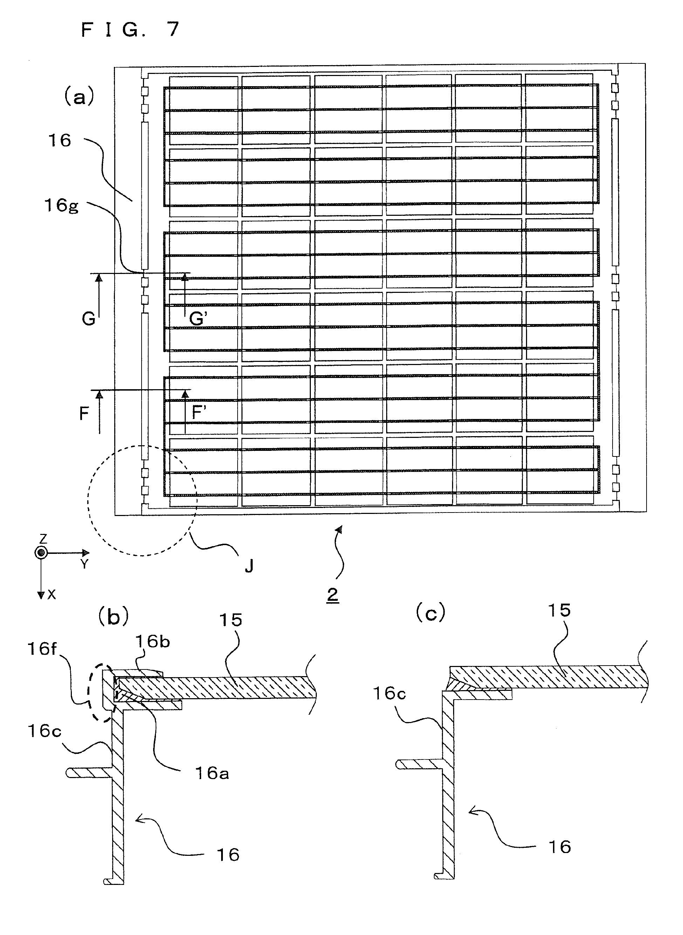

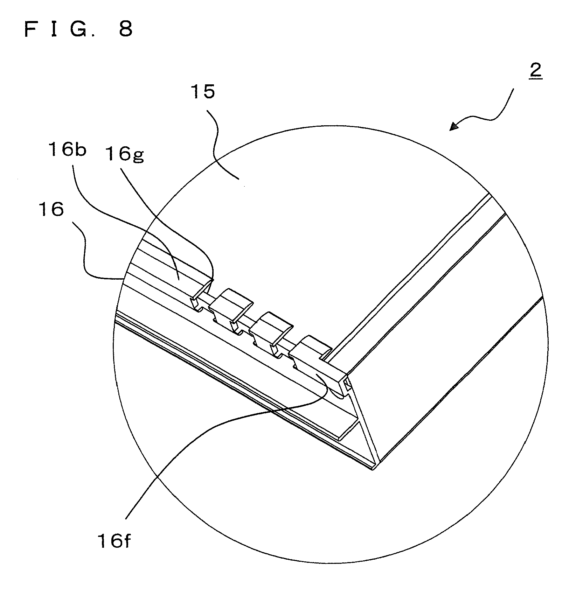

A photovoltaic system 1 according to a second embodiment of the present invention differs from that according to the first embodiment in the structure of the eaves-side frame member 16 of the solar cell module 2 as illustrated in Figs. 7 and 8. In this embodiment, the first frame member 16v has one or more notches 16g in the upper surface thereof.

Referring to Fig. 7, the notches 16g are arranged in the frame upper surface 16b and an overhang portion 16f of the frame member 16. Each notch 16g has a width of 1 to 2 cm in the X-axis direction.

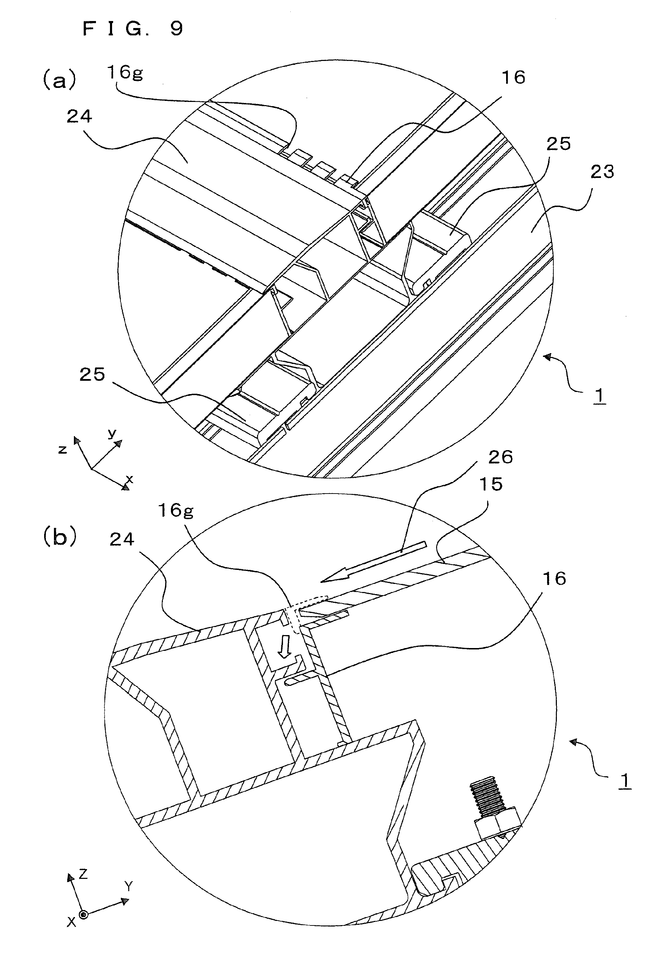

Referring to Figs. 9(a) and (b), the frame member 16 having the notches 16g is disposed in eaves-side part of the solar cell module 2. Consequently, rainwater on the photovoltaic system 1 passes through the notches 16g in the frame upper surface 16b and the overhang portion 16f and flows into the lateral rail member 24. The flow of water is indicated by an arrow 26 in Fig. 9(b).

The overhang portion 16f protruding outwardly from the frame side surface is disposed near the fitting portion 16a. Since the notches 16g are arranged, the overhang portion 16f has a structure partially notched. Accordingly, a space is provided under the overhang portion 16f. This space defines a passage for rainwater.

The notches 16g can be arranged at any positions in the eaves-side frame. For example, the notches 16g may be arranged in substantially middle part of the eaves-side frame of the solar cell module. This prevents water from accumulating in the vicinity of central part of the solar cell panel, thus enhancing an anti-contamination effect. The notches 16g may be arranged in both end parts of the first frame member 16v in the longitudinal direction of the first frame member 16v. Consequently, an excessive decrease in strength of the first frame member 16v can be reduced and a drainage effect can be maintained.

The water which has flowed into the lateral rail member 24 smoothly flows along the lateral rail member 24 in the X-axis direction and is then efficiently discharged from an end portion of the lateral rail member 24. According to this embodiment, the anti-contamination properties are further enhanced in the above-described manner.

### <Third Embodiment>

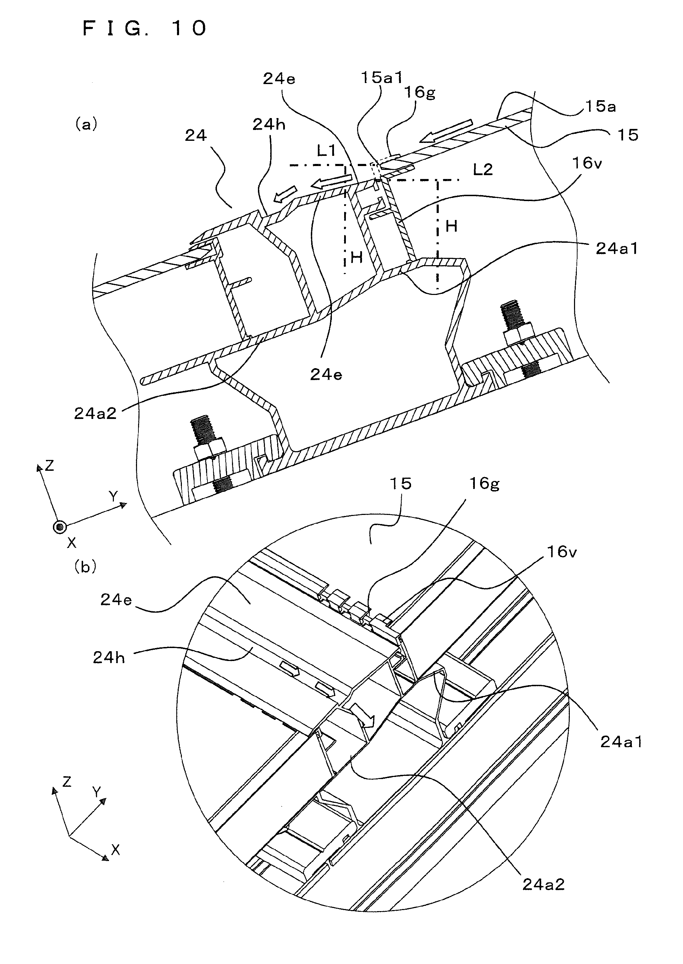

A photovoltaic system 1 according to a third embodiment of the present invention differs from that according to the second embodiment in the height of the light receiving surface 15a of the solar cell panel 15 exposed in the notches 16g of the first frame member 16v of the solar cell module 2. Referring to Fig. 10, in this embodiment, a level L1 of a light receiving surface 15a1 (upper surface) of the solar cell panel 15 exposed in the notches 16g in the vertical direction is higher than a level L2 of the upper surface of the lateral rail member 24, corresponding to the first rail member, in the vertical direction. In other words, in the embodiment, a height in the Z-axis direction from the first support portion 24a1, which supports the first frame member 16v, of the lateral rail member 24 to the upper portion 24e thereof is less than the height of the first frame member 16v of the solar cell module 2 in the Z-axis direction.

On the other hand, a height from the second support portion 24a2, which supports the second frame member 16w, of the lateral rail member 24 to the upper portion 24e thereof is substantially the same as the height of a second frame member 162 of the solar cell module 2 in the Z-axis direction.

Consequently, if the notches 16g of the frame member 16 are clogged with a large amount of sand or mud after long-term use, the sand or mud tends to flow downward (toward the eaves) together with rainwater on the solar cell panel 15. This results in a reduction in dust or the like remaining on the solar cell panel 15.

Furthermore, as illustrated in Fig. 10, the upper surface 24e of the lateral rail member 24 may have a recess 24h opening in the upper surface 24e in the embodiment. Accordingly, rainwater and sand flowing from the light receiving surface 15a of the solar cell panel 15 of the solar cell module 2 disposed on the ridge side tend to accumulate in the recess 24h. Consequently, the rainwater and sand do not tend to flow to the solar cell module 2 disposed on the eave side. Thus, dirt on the solar cell panel 15 of the solar cell module 2 disposed on the eave side is reduced. In addition, rainwater and sand accumulated in the recess 24h flow in the X-axis direction and are then discharged from the sides of the photovoltaic system 1. In this case, the recess 24h may be greater than or equal to a step defined by the light receiving surface 15a of the solar cell panel 15 and the frame upper surface 16b.

### <Fourth Embodiment>

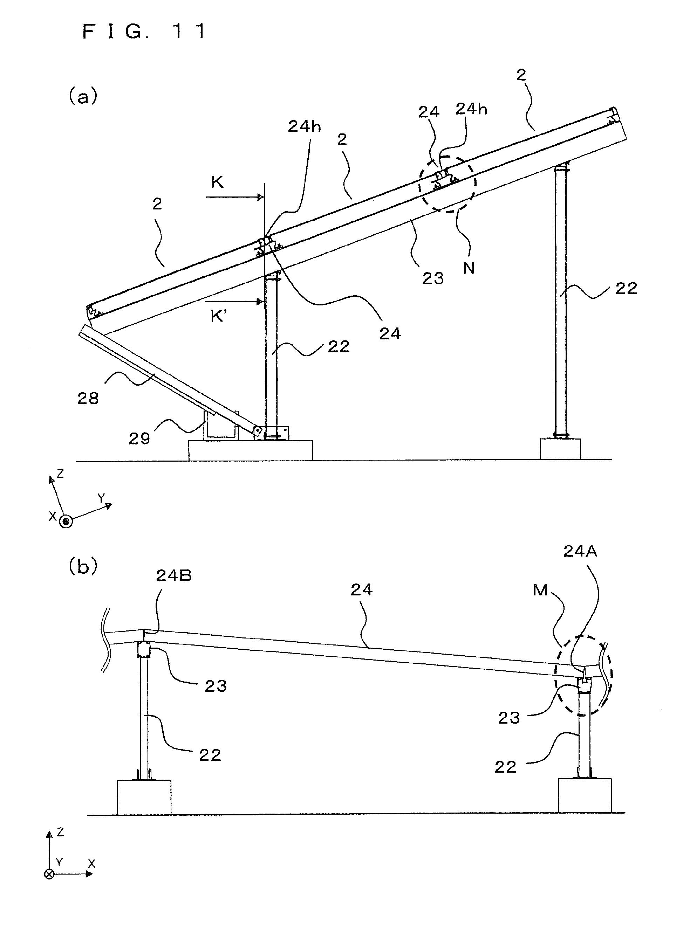

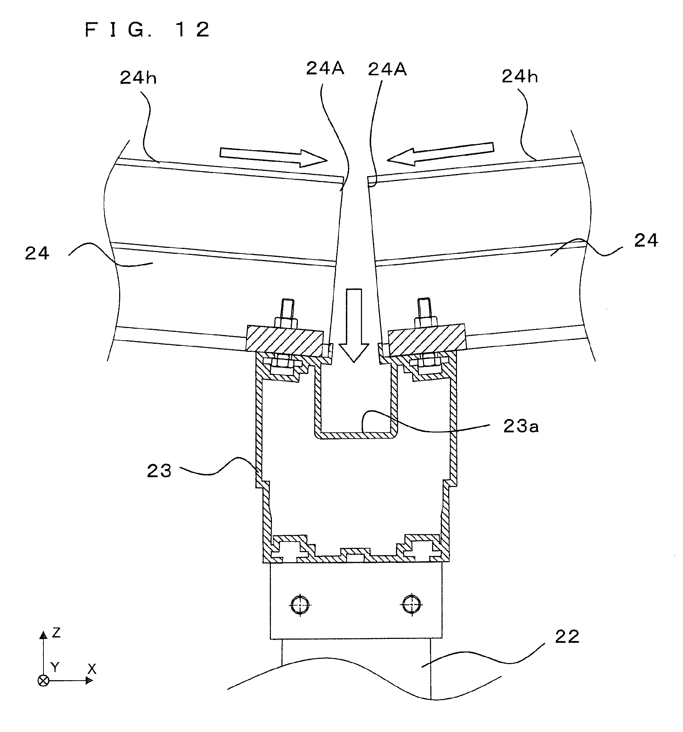

A photovoltaic system 1 according to a fourth embodiment of the present invention differs from that according to the third embodiment in that the longitudinal rail member 23 has a recess 23a in the upper surface thereof as illustrated in Figs. 11 and 12. In this case, the recess 24h of the lateral rail member 24 extends to a first end 24A of the lateral rail member 24 as illustrated in Fig. 12. As regards the structure of the lateral rail member 24 in this embodiment, at least one of the above-described first and second lateral rail members 242 and 241 may have this structure. The longitudinal rail member 23 is disposed under the first end 24A of the lateral rail member 24 (in a -Z direction).

Consequently, in the embodiment, water flowing in the X direction in the recess 24h of the lateral rail member 24 is collected in the recess 23a of the longitudinal rail member 23. The collected water flows downward in the -Y direction. Thus, the drainage effect of the photovoltaic system is enhanced. In this case, as illustrated in Fig. 11(b), the lateral rail member 24h may be disposed such that the level of a second end 24B of the lateral rail member 24h is higher than that of the first end 24A thereof in the vertical direction (+Z direction). Consequently, if a small amount of water accumulates in the recess 24h of the lateral rail member 24, the water is easily discharged to the outside. This results in a reduction in sand or the like remaining in the recess 24h of the lateral rail member 24. Such a configuration can be achieved by, for example, allowing the pole members 22 arranged under the first and second ends 24A and 24B of the lateral rail member 24 to have different lengths. In addition, the angle of inclination of the lateral rail member 24 may be determined in consideration of a warp in substantially the middle of the lateral rail member 24 caused by the weight of the solar cell array. It is sufficient that the lateral rail member 24 is inclined in one direction at an angle above the horizontal in the warp portion.

Furthermore, in the embodiment, as illustrated in Fig. 11, water flowing in the recess 23a of the longitudinal rail member 23 can be collected in a container 29 through a gutter 28 disposed on a lower edge side of the longitudinal rail member 23. The rainwater collected in that manner can be used to wash off fine dust on the photovoltaic system 1 and can also be used for irrigation or the like in the surrounding area. For example, if the photovoltaic system 1 with the above-described configuration is installed in a desert area with a low rainfall, this configuration is useful because a relatively large amount of water can be efficiently collected.

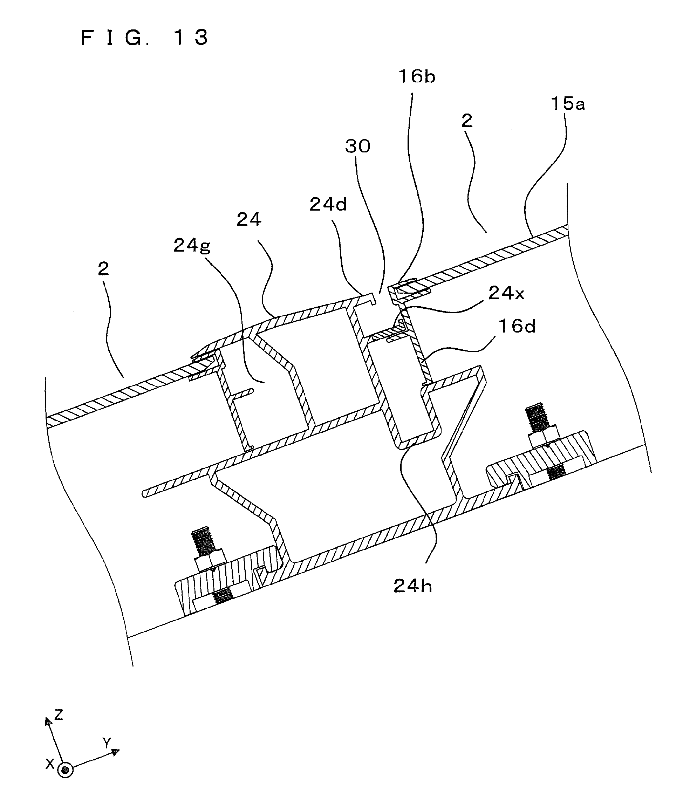

The shape of the lateral rail member 24 in the embodiment is not limited to that illustrated in Fig. 10. For example, the lateral rail member 24 may have a shape illustrated in Fig. 13. Referring to Fig. 13, the lateral rail member 24 includes an abutment portion 24x that is long in the Y-axis direction. Accordingly, the upper face end 24d of the lateral rail member 24 is not contact with the frame upper surface 16b but the abutment portion 24x is in contact with the frame side surface 16d. In such a configuration, a gap portion 30 is defined between the upper face end 24d and the frame upper surface 16b. Water flowing on the light receiving surface 15a of the solar cell panel 15 flows into the gap portion 30, so that the water can be collected in the recess 24h. Furthermore, the abutment portion 24x may be notched partially to enable water to efficiently flow into the recess 24h.

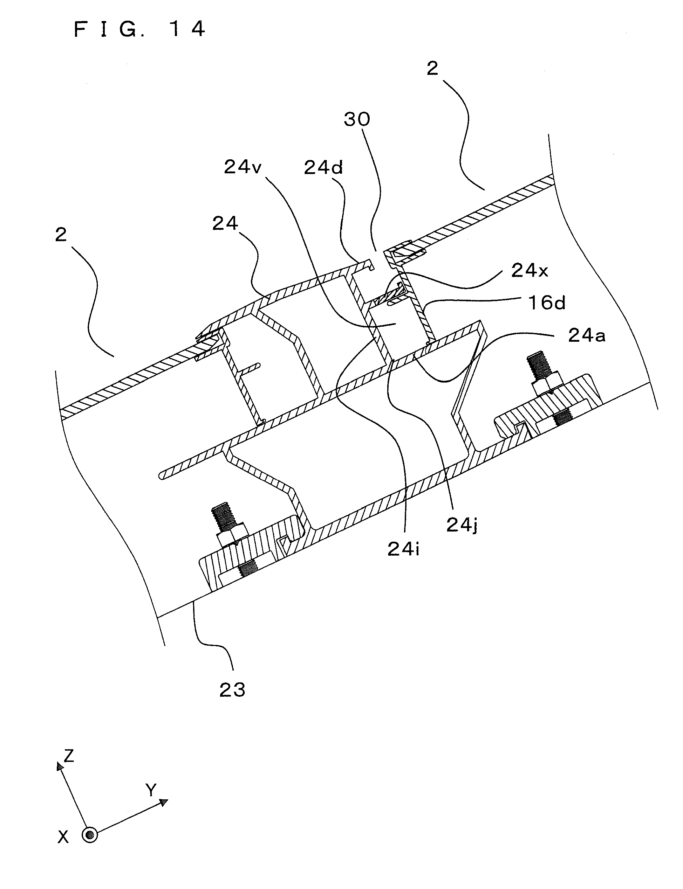

If the longitudinal rail member 23 is inclined at a large angle in the embodiment, water can be guided into the recess 23a of the longitudinal rail member 23 with the lateral rail member 24 having no recess 24h. For example, when the longitudinal rail member 23 is inclined at a large angle as illustrated in Fig. 14, water tends to accumulate in a corner 24j defined by the support portion 24a and a portion 24i of the lateral rail member 24. The water accumulated in the corner 24j flows in the X direction, so that the water can be collected in the recess 23a of the longitudinal rail member 23. After that, the water collected in the recess 23a can be drained downward in the - Y direction, for example. This facilitates collection of water in the above-described container 29.

In the photovoltaic system 1, the lateral rail member 24 positioned closest to the edge of the eaves receives the solar cell module 2 on only the ridge side. Accordingly, the lateral rail member 24 closest to the edge of the eaves may have no second fitting portion 24g that is disposed on the second rail side portion 24w side as illustrated in Fig. 14.

The present invention is not limited to the above-described embodiments. The details of the embodiments may be changed for suitable use. For example, all of the lateral rail members 24 of the photovoltaic system 1 do not necessarily have to have the recess 24h. Some of the lateral rail members 24 may have the recess 24h. For example, only the lateral rail member 24 closest to the edge of the eaves may have the recess 24h and the other lateral rail members 24 may have no recess 24h in the photovoltaic system 1. Consequently, when water is artificially applied to the photovoltaic system 1 so that the water flows from ridge-side part of the photovoltaic system 1 to remove dirt, washing of the solar cell modules 2 up to the solar cell module 2 closest to the edge of the eaves can be achieved without reducing the amount of water in a middle lateral rail member 24.

### Description of the reference Numerals

- 1: photovoltaic system
- 2: solar cell module
- 3: mount
- 11: translucent substrate
- 12: solar cell element
- 13: filler
- 14: rear-surface protector
- 15: solar cell panel
15a, 15a1 light receiving surface
15b rear surface (non-light receiving surface)
- 16: frame member
16a fitting portion (first frame engagement portion)
16b frame upper surface
16c frame bottom face
16d frame side surface
16e first projection
16f overhang portion
16g notch
16v eaves-side frame (first frame member)
16w ridge-side frame (second frame member)
16x third frame member
16y fourth frame member
- 17: hole
- 18: rear-surface reinforcing member
- 21: base
21a first base
21b second base
- 22: pole member
- 23: longitudinal rail member
23a second recess
- 24: lateral rail member
- 241: second lateral rail member
- 242: first lateral rail member
24a support portion (guide portion)
24a1 first support portion
24a2 second support portion
24b bottom portion
24c hook-shaped portion
24d upper face end
24e upper portion
24f first fitting portion
24g second fitting portion
24h recess
24i wall portion
24j corner
24v first rail side portion
24w second rail side portion
24x abutment portion
- 25: stopper
- 26: water flow
- 27: fastening member
- 28: gutter
- 29: container
- 30: gap portion

## Claims

1. A photovoltaic system comprising:
a plurality of lateral rail members arranged parallel to one another on a sloping arrangement surface towards from a top to a bottom of the arrangement surface, each lateral rail member including a first rail side portion located on an upper side of the arrangement surface and a second rail side portion located on a lower side of the arrangement surface; and
a solar cell module disposed between a first lateral rail member and a second lateral rail member adjacent to each other of the lateral rail members, the first lateral rail member being located on the lower side, the second lateral rail member being located on the upper side,
wherein the solar cell module includes
a solar cell panel,
a first frame member disposed next to the first rail side portion of the first lateral rail member, the first frame member protecting a first panel side portion of the solar cell panel, and
a second frame member disposed next to the second rail side portion of the second lateral rail member, the second frame member protecting a second panel side portion opposite the first panel side portion, and
wherein a level of an upper surface of the first frame member in a vertical direction is equal to or higher than a level of an upper surface of the first lateral rail member in the vertical direction.

2. The photovoltaic system according to Claim 1,
wherein the first frame member includes a first frame engagement portion that is located in a side part of the first frame member and that engages with the first rail side portion of the first lateral rail member, and
wherein the lateral rail member includes a guide portion that abuts against a lower surface of the first frame member of the solar cell module and guides the first frame engagement portion to the first rail side portion.

3. The photovoltaic system according to Claim 1 or 2, wherein the second rail side portion of the lateral rail member covers an upper surface of the second frame member of the solar cell module.

4. The photovoltaic system according to any one of Claims 1 to 3, wherein the first frame member of the solar cell module includes one or more notches in the upper surface of the first frame member.

5. The photovoltaic system according to Claim 4, wherein the notches are arranged in both end parts and middle part of the first frame member in a longitudinal direction of the first frame member.

6. The photovoltaic system according to Claim 4 or 5, wherein a level of an upper surface of the solar cell panel exposed in the notches in the vertical direction is equal to or higher than the level of the upper surface of the first lateral rail member in the vertical direction.

7. The photovoltaic system according to any one of Claims 1 to 6, wherein at least one of the first and second lateral rail members is provided with a recess opening in a part of the upper surface.

8. The photovoltaic system according to Claim 7,
wherein the recess extends to an one end of at least one of the first and second lateral rail members that is provided with the recess, and
wherein the photovoltaic system further comprises a longitudinal rail member disposed under the one end, the longitudinal rail member provided with a recess in an part of an upper surface thereof corresponding to the arrangement surface.

9. The photovoltaic system according to Claim 8, wherein the one end of the at least one of the first and second lateral rail members that is provided with the recess is at a lower level than another end thereof in the vertical direction.

10. The photovoltaic system according to any one of Claims 1 to 8, wherein the solar cell module is fixed to each of the lateral rail members by a fastening member.

11. The photovoltaic system according to any one of Claims 1 to 9, wherein each lateral rail member comprises an aluminum alloy.
